# EUROPEAN PATENT APPLICATION

(11) **EP 3 300 270 A1**
(43) Date of publication of application: **28.03.2018**
(21) Application number: 16306239.1
(22) Date of filing: 27.09.2016
(51) Int. Cl.: H04J 14/02, H04B 10/50, H04B 10/61

(54) **MULTI-CHANNEL OPTICAL TRANSMITTER**

(71) Applicant: ALCATEL LUCENT, 92100 Boulogne-Billancourt (FR)
(72) Inventor: GHAZISAEIDI, Amirhossein, 91620 Nozay (FR); RENAUDIER, Jeremie, 91620 Nozay (FR)
(74) Representative: Loyer & Abello

(57) **Abstract**

A multi-channel optical transmitter (1) for WDM optical communications, comprises:
a plurality of wavelength-tunable laser sources (5) configured to emit a plurality of optical carrier signals on a plurality of wavelength channels,
a plurality of optical modulators (6) configured to modulate the plurality of optical carrier signals with data to produce a plurality of modulated optical signals,
an optical combiner (7) configured to superimpose the plurality of modulated optical signals in a propagation medium, and
a dither signal generator (11) configured to generate a shared dither signal for the plurality of laser sources and to provide the shared dither signal (17) to a tuning port of each of the laser sources in order to dither the wavelengths of the wavelength channels. Multi-channel preand/or post-compensation processing may be applied in the digital domain, e.g. multichannel DBP.

## Description

### Field of the invention

The invention relates to the technical field of wavelength-division multiplexed (WDM) optical communication systems, and in particular to optical transmitters suitable for WDM optical communications.

### Background

In a WDM optical communication system, all co-propagating wavelengths interact through nonlinear Kerr effect of the optical fiber. The performance of WDM optical communication systems is limited by fiber nonlinearity. Mitigating the nonlinear penalty is thus essential. This topic has been a subject of active research since the early days of fiber-optic communications. With the advent of digital coherent receivers, digital signal processing techniques have been devised to compensate dispersion and polarization mode dispersion in the electrical domain.

Digital backward propagation (DBP) has been proposed for the comprehensive compensation of fiber impairments. DBP is based first, on the coherent detection of the optical signal and second, on the implementation of backward propagation in the digital domain. This implementation consists on solving the z-reversed propagation equations that describe nonlinear transmission in fibers. Provided that the channel characteristics are known, and provided the WDM channels share the same optical path, any deterministic effect can be pre-compensated at the transmitter and/or post-compensated at the receiver. The joint compensation of dispersion and nonlinearity allows increasing the launch power to values beyond the traditional nonlinear limit. Therefore, higher OSNR is achieved and transmission reach can be extended.

Theoretical definitions and computational implementations of DBP and multi-channel DBP (MDBP) can be found in the literature, e.g. "Improved digital backward propagation for the compensation of inter-channel nonlinear effects in polarization-multiplexed WDM systems", Optics Express 19(2):570-83 January 2011.

### Summary

Aspects of the invention stem for the observation that one major constraint for the realization of multi-channel digital compensation of fiber nonlinearity is that optical carrier signals have to be synchronized together.

Aspects of the invention are based on the idea of providing frequency synchronization between multiple optical carrier signals, so that cross phase modulation (XPM) may be efficiently compensated for in the digital domain at a transmitter and/or at a receiver of the multiple optical signals.

Aspects of the invention are based on the idea of generating multiple optical carrier signals in a joint manner at an optical transmitter for the purpose of transmitting the multiple optical carrier signals together in the manner of a superchannel across an optical system.

For that purpose, the gist of the invention is to provide N independent laser sources with synchronous electrical dithering signal applied to all N laser sources, where N is a positive integer number. As employed herein, a dithering signal is an intentionally applied pre-defined distortion meant to dominate stochastic uncontrolled deviations.

In an embodiment, the invention provides a multi-channel optical transmitter for WDM optical communications, comprising:
a plurality of wavelength-tunable laser sources configured to emit a plurality of optical carrier signals on a plurality of wavelength channels,
a plurality of optical modulators configured to modulate the plurality of optical carrier signals with data to produce a plurality of modulated optical signals,
an optical combiner configured to superimpose the plurality of modulated optical signals in a propagation medium, and
a dither signal generator configured to generate a shared dither signal for the plurality of laser sources and to provide the shared dither signal to a tuning port of each of the laser sources in order to dither the wavelengths of the wavelength channels.

According to embodiments, such multi-channel optical transmitters can comprise one or more of the features below.

In an embodiment, the optical modulators modulate the plurality of optical carrier signals with data at a Baud rate and wherein the shared dither signal has a frequency lower than a fraction of the Baud rate of the data, e.g.10⁻⁵ the Baud rate or less.

In an embodiment, the shared dither signal amplitude is configured so that the wavelength channels of the optical carrier signals are shifted by a fraction of a bandwidth of a modulated optical signal, e.g. less than 10⁻¹ times the signal bandwidth, preferably less than 10⁻² times the signal bandwidth.

In an embodiment, the multi-channel optical transmitter further comprises a driver circuit for driving the plurality of optical modulators, wherein the driver circuit comprises a digital pre-compensation module for applying multi-channel pre-compensation processing to the data.

As employed herein, multi-channel pre- or post- compensation processing refers to compensation of impairments by way of digital signal processing that takes into account multi-channel effects such as cross modulation. A number of digital processing techniques may be employed for the multi-channel pre-compensation processing. In embodiments, the multi-channel pre-compensation processing comprises multi-channel digital backward propagation (MBDP) processing or any other multi-channel nonlinear compensation processing.

In an embodiment, the shared dither signal is an electrical signal.

In an embodiment, the wavelength-tunable laser sources are selected in the group consisting of BDR lasers, DFB lasers and GCSR lasers.

In an embodiment, the invention also provides an optical communication system comprising:
a multi-channel optical transmitter as defined above,
an optical receiver, and
an optical link connecting the optical receiver to the optical transmitter in the optical domain.

According to embodiments, such optical communication systems can comprise one or more of the features below.

In an embodiment, the optical receiver comprises a wavelength demultiplexer for separating the plurality of modulated optical signals as a function of the wavelength channels, a plurality of coherent receivers for detecting the plurality of modulated optical signals and a digital post-compensation module for applying multi-channel post-compensation processing to the detected signals.

A number of digital processing techniques may be employed for the multi-channel post-compensation processing. In embodiments, the multi-channel post-compensation processing comprises multi-channel digital backward propagation processing or any other multi-channel nonlinear compensation processing.

### Brief description of the drawings

These and other aspects of the invention will be apparent from and elucidated with reference to the embodiments described hereinafter, by way of example, with reference to the drawings.
Figure 1 is a functional representation of a multi-channel optical transmitter in accordance with an embodiment.
Figure 2 is a functional representation of a driving circuit that can be used in the multi-channel optical transmitter of Fig. 1 in accordance with an embodiment.
Figure 3 is a functional representation of an optical communication system in which the multi-channel optical transmitter of Fig. 1 may be used.

### Detailed description of the embodiments

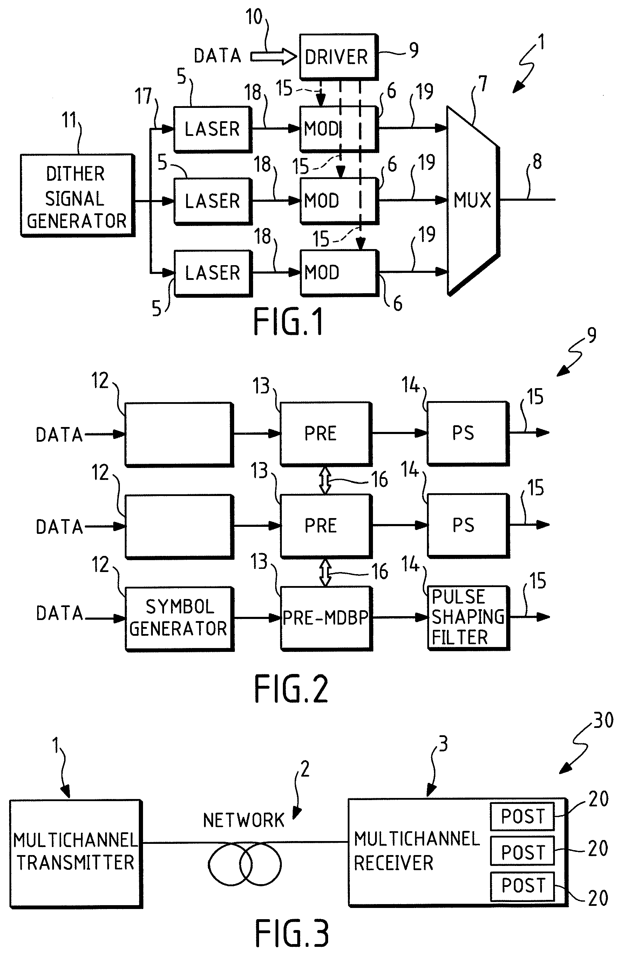

With reference to Figure 1, a multi-channel optical transmitter 1 will now be described. The multi-channel optical transmitter 1 comprises a plurality of wavelength-tunable laser sources 5 configured to emit a plurality of optical carrier signals 18 on respective wavelength channels. A respective optical modulator 6 is arranged at the output of each laser source 5 in order to modulate the generated optical carrier signal 18 with respective data to produce a respective modulated optical signal 19. A driver circuit 9 generates driving currents 15 for the optical modulators 6 as a function of a data stream 10 to be transmitted.

The plurality of modulated optical signals 19 is combined by an optical combiner 7 configured to superimpose the plurality of modulated optical signals 19 in an output waveguide 8, e.g. an optical fiber or other suitable propagation medium. As a result a WDM optical signal is transmitted in the output waveguide 8 and can be employed to communicate the data to a distant location, e.g. at a distance comprised between a few centimeters and several thousands of kilometers depending on applications and configuration of the optical links.

Although Fig. 1 shows a total of three laser sources for generating and combining three modulated optical signals 19, the multi-channel optical transmitter 1 may be made with a lower or higher number of laser sources and modulators, e.g. up to 100 laser sources for DWDM transmission in the C+L bands.

Multi-channel optical transmitter 1 is especially suitable for generating modulated optical signals 19 which are all transmitted along a same optical path to a given destination, where the modulated optical signals 19 are all received and demodulated by a suitable optical receiver. In that context, the WDM optical signal consisting of the combined modulated optical signals 19 is referred to as a superchannel. A superchannel is a group of 2, 3, 4 or more modulated optical signals carried on different wavelength channels, that are generated and routed together through an optical link or network, therefore co-propagating together all the way from transmitter to receiver.

The multi-channel optical transmitter 1 also comprises a dither signal generator 11 1 configured to generate a shared dither signal 17 for the plurality of laser sources 5 and to provide the shared dither signal to a tuning port of each of the laser sources 5 in order to dither the wavelengths of the wavelength channels.

Thanks to this feature, substantial phase synchronization is achieved between all the optical carrier signals 18. More precisely, the phase-noise of each laser source 5 may not be entirely synchronized with the other laser sources 5 to the same extent that would be obtained if a single laser source were employed for generating the entire comb of wavelength channels. However, the frequency dithering controlled by the shared dither signal 17 causes a predominant portion of the phase drift in all the laser sources 5, so that the laser sources 5 are effectively locked in frequency, notwithstanding negligible random deviation between the phase-noise of each laser source. The resulting frequency synchronization makes it possible to efficiently compensate for cross phase modulation (XPM) by digital signal processing at the transmitter and/or receiver. It is noted that XPM is a predominant impairment in WDM transmissions for high symbol-rate modulated signals.

The proposed solution achieves frequency synchronization between optical carrier signals while guaranteeing tunability properties of wavelength channels and frequency spacing between wavelength channels within an N-carrier superchannel.

For that purpose, the shared dither signal 17 is low amplitude and has a bandwidth substantially lower than the modulating symbol rate, e.g. 10⁻⁵ times the Baud rate, or less. The shared dither signal 17 is generated by dither signal generator 11 and can be sinusoidal, triangular, sawtooth, or other signal types. These various signal types can be generated by the use of a look-up table within dither signal generator 11. The frequency of the dither signal can be controlled by a firmware routine written in a DSP, or an external clock and a numerically controlled oscillator (NCO).

The amount of deviation of the optical carrier signals 18 (i.e., in wavelength or optical frequency) caused by the shared dither signal 17 is determined by the amplitude of the shared dither signal 17. The rate of the deviation is determined by the frequency of the shared dither signal 17. Thus, the amplitude of shared dither signal 17 controls the amount of movement in spectrum and the frequency of shared dither signal 17 controls the rate at which the movement occurs. In one embodiment, the amplitude of the dither signal is selected such that the peak frequency deviation is a fraction of the bandwidth of a modulated optical signal 19, e.g. less than 1/10 or 1/100 of that bandwidth. For example, for a modulated optical signal 19 having 50GHz bandwidth, the peak frequency deviation of 150MHz may be acceptable.

The dither signal frequency is generally less than a fraction of the Baud rate of the data, e.g. 10⁻⁵ times the Baud rate.

In order to modify the optical carrier frequency of each laser source 5, the shared dither signal 17 is provided to one of the tuning ports of each laser source 5 for controlling one drive current of the laser source 5. The corresponding drive currents are defined as a function of the technology employed for implementing the laser sources 5, and may include a gain current, a coupler current, a reflector current, and a phase current.

The laser sources 5 can be of any laser type that is used in the art. In one embodiment, laser source 5 is a distributed Bragg reflector (DBR) laser that can be tuned over 40 nm to cover approximately 50 ITU wavelengths at a nominal wavelength of 1535 to 1580 nm. The invention can be practiced using other lasers, including a distributed feedback (DFB) laser, a sampled grating reflector (GCSR) laser, and others.

Optical modulator 6 can be of various types. For example, optical modulator 6 can be an electro-optic modulator, an electro-absorption modulator, or other types of modulator. It should be noted that each of the optical carrier signals 18 is modulated by a distinct optical modulator 6 driven by a distinct driving current 15, so that each modulated optical signal 19 eventually carries a distinct substream of the data. The substreams carried by the plurality of modulated optical signals 19 may be correlated or uncorrelated, depending on implementation of the driver circuit 9 of the optical modulators 6.

An implementation of the driver circuit 9 suitable for achieving digital pre-compensation of impairments is shown on Fig. 2. For generating each driving current 15, the driver circuit 9 comprises a respective data processing line that includes a symbol generator 12 for generating symbols in accordance with a defined modulation scheme, a digital pre-compensation module 13 for applying multi-channel pre-compensation processing to the generated symbols, and a pulse shaping filter 14. Digital pre-compensation modules 13 belonging to the different data processing lines operate in synergy to compensate for cross-modulation effects between the signals, as indicated by arrows 16. Digital pre-compensation modules 13 may apply various digital methods, e.g. MBDP or any multi-channel Non-Linear Compensation algorithm.

PNLC is described in the literature, e.g. in the article "Submarine Transmission Systems Using Digital Nonlinear Compensation and Adaptive Rate Forward Error Correction", JOURNAL OF LIGHTWAVE TECHNOLOGY, VOL. 34, NO. 8, APRIL 15, 2016.

In addition to or as an alternative of pre-compensation at the transmitter, digital post-compensation of impairments may be employed at the receiver. Multi-channel pre- or post- compensation of impairments by way of digital signal processing is mostly relevant to transmissions in which the wavelength channels share the same optical path. Fig. 3 illustrates schematically an optical communication system is which such transmissions may be achieved.

In Fig. 3, optical communication system 30 comprises the multi-channel optical transmitter 1, an optical network 2 and a multi-channel optical receiver 3. The optical network 2 is configured to define a shared optical path for all the modulated optical signals 19 generated by multi-channel optical transmitter 1 down to multi-channel optical receiver 3. In other words, the generated WDM signal is transmitted as a superchannel to multi-channel optical receiver 3.

Although optical network 2 is simply depicted as a length of optical fiber, the skilled person will appreciate that optical network 2may be constituted by a variety of optical components such as waveguides, amplifiers, filters, regenerators, splitters, combiners, optical switches and the like. Optical network 2 may have any number of links and nodes arranged in any topology, such as point-to-point, ring, mesh and others.

In a known manner, multi-channel optical receiver 3 may comprise a wavelength demultiplexer (not shown) for separating the plurality of modulated optical signals as a function of the wavelength channels, a plurality of coherent receivers (not shown) for detecting the plurality of modulated optical signals and digital post-compensation modules 20 for applying multi-channel post-compensation processing to the detected signals. Digital post-compensation modules 13 may apply various digital methods, e.g. MBDP or Multi-channel PNLC.

The digital pre- or post-compensation modules in multi-channel optical transmitter 1 or multi-channel optical receiver 3 provide joint compensation of the nonlinearity of the sub-carriers inside the superchannel. In the multi-channel optical transmitter 1, multi-carrier synchronization that enables multi-channel compensation of fiber nonlinearity is provided in a very simple and reliable manner.

At least some of the components described above can be implemented within a digital signal processor (DSP). For example, driver circuit 9 and dither signal generator 11 can be included in the DSP. The DSP can be a custom designed circuit or a standard part from a manufacturer These components can also be implemented using a processor, a microcomputer, a controller, a signal processor, an application specific integrated circuit (ASIC), a memory device, or the like.

It is noted that driver circuit 9 and dither signal generator 11 may be provided separately, e.g. as multiple DSPs or controllers, or in an integrated manner, e.g. as a single DSP or controller. The integration of those components within a DSP can provide additional advantages. For example, the DSP can also incorporate control for other features of optical transmitter 1.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A multi-channel optical transmitter (1) for WDM optical communications, comprising:
a plurality of wavelength-tunable laser sources (5) configured to emit a plurality of optical carrier signals (18) on a plurality of wavelength channels,
a plurality of optical modulators (6) configured to modulate the plurality of optical carrier signals with data to produce a plurality of modulated optical signals (19),
an optical combiner (7) configured to superimpose the plurality of modulated optical signals in a propagation medium (8), and
a dither signal generator (11) configured to generate a shared dither signal (17) for the plurality of laser sources and to provide the shared dither signal to a tuning port of each of the laser sources (5) in order to dither the wavelengths of the wavelength channels.

2. A multi-channel optical transmitter in accordance with claim 1, wherein the optical modulators (6) modulate the plurality of optical carrier signals with data at a Baud rate and wherein the shared dither signal (17) has a frequency lower than a fraction of the Baud rate of the data.

3. A multi-channel optical transmitter in accordance with claim 1 or 2, wherein the shared dither signal (17) has an amplitude configured so that the wavelength channels of the optical carrier signals are shifted by a fraction of a bandwidth of a modulated optical signal.

4. A multi-channel optical transmitter in accordance with any one of claims 1 to 3, further comprising a driver circuit (9) for driving the plurality of optical modulators, wherein the driver circuit comprises a digital pre-compensation module (13) for applying multi-channel pre-compensation processing to the data.

5. A multi-channel optical transmitter in accordance with claim 4, wherein the multi-channel pre-compensation processing comprises multi-channel digital backward propagation processing.

6. A multi-channel optical transmitter in accordance with any one of claims 1 to 4, wherein the shared dither signal (17) is an electrical signal.

7. A multi-channel optical transmitter in accordance with any one of claims 1 to 6, wherein the wavelength-tunable laser sources (5) are selected in the group consisting of BDR lasers, DFB lasers and GCSR lasers.

8. A optical communication system comprising:
a multi-channel optical transmitter (1) in accordance with any one of claims 1 to 7,
an optical receiver (3), and
an optical link (2) connecting the optical receiver to the optical transmitter in the optical domain.

9. An optical communication system in accordance with claim 8, wherein the optical receiver (3) comprises a wavelength demultiplexer for separating the plurality of modulated optical signals as a function of the wavelength channels, a plurality of coherent receivers for detecting the plurality of modulated optical signals and a digital post-compensation module (20) for applying multi-channel post-compensation processing to the detected signals.

10. An optical communication system in accordance with claim 9, wherein the multi-channel post-compensation processing comprises multi-channel digital backward propagation processing.

## Amended claims

### Amended claims in accordance with Rule 137(2) EPC.

1. A multi-channel optical transmitter (1) for WDM optical communications, comprising:
a plurality of wavelength-tunable laser sources (5) configured to emit a plurality of optical carrier signals (18) on a plurality of wavelength channels,
a plurality of optical modulators (6) configured to modulate the plurality of optical carrier signals with data to produce a plurality of modulated optical signals (19),
an optical combiner (7) configured to superimpose the plurality of modulated optical signals in a propagation medium (8), and
**characterized in that** the multi-channel optical transmitter further comprises a dither signal generator (11) configured to generate a shared dither signal (17) for the plurality of laser sources and to provide the shared dither signal to a tuning port of each of the laser sources (5) in order to dither the wavelengths of the wavelength channels.

2. A multi-channel optical transmitter in accordance with claim 1, wherein the optical modulators (6) modulate the plurality of optical carrier signals with data at a Baud rate and wherein the shared dither signal (17) has a frequency lower than a fraction of the Baud rate of the data.

3. A multi-channel optical transmitter in accordance with claim 1 or 2, wherein the shared dither signal (17) has an amplitude configured so that the wavelength channels of the optical carrier signals are shifted by a fraction of a bandwidth of a modulated optical signal.

4. A multi-channel optical transmitter in accordance with any one of claims 1 to 3, further comprising a driver circuit (9) for driving the plurality of optical modulators, wherein the driver circuit comprises a digital pre-compensation module (13) for applying multi-channel pre-compensation processing to the data.

5. A multi-channel optical transmitter in accordance with claim 4, wherein the multi-channel pre-compensation processing comprises multi-channel digital backward propagation processing.

6. A multi-channel optical transmitter in accordance with any one of claims 1 to 4, wherein the shared dither signal (17) is an electrical signal.

7. A multi-channel optical transmitter in accordance with any one of claims 1 to 6, wherein the wavelength-tunable laser sources (5) are selected in the group consisting of BDR lasers, DFB lasers and GCSR lasers.

8. A optical communication system comprising:
a multi-channel optical transmitter (1) in accordance with any one of claims 1 to 7,
an optical receiver (3), and
an optical link (2) connecting the optical receiver to the optical transmitter in the optical domain.

9. An optical communication system in accordance with claim 8, wherein the optical receiver (3) comprises a wavelength demultiplexer for separating the plurality of modulated optical signals as a function of the wavelength channels, a plurality of coherent receivers for detecting the plurality of modulated optical signals and a digital post-compensation module (20) for applying multi-channel post-compensation processing to the detected signals.

10. An optical communication system in accordance with claim 9, wherein the multi-channel post-compensation processing comprises multi-channel digital backward propagation processing.
